# EUROPEAN PATENT SPECIFICATION

(11) **EP 2 286 403 B1**
(45) Date of publication and mention of the grant of the patent: **23.03.2016**
(21) Application number: 09738175.0
(22) Date of filing: 29.04.2009
(51) Int. Cl.: A61C 11/00, A61C 19/05, G09B 23/28, A61C 13/00

(54) **METHOD TO DETERMINE THE IMPACT OF A PROPOSED DENTAL MODIFICATION ON THE TEMPOROMANDIBULAR JOINT**
VERFAHREN ZUR BESTIMMUNG DER AUSWIRKUNG EINER VORGESCHLAGENEN DENTALEN MODIFIKATION AM TEMPOROMANDIBULARGELENK
PROCÉDÉ POUR DÉTERMINER L'IMPACT D'UNE MODIFICATION DENTAIRE PROPOSÉE SUR L'ARTICULATION TEMPORO-MANDIBULAIRE

(30) Priority: 29.04.2008 GB 0807754
(43) Date of publication of application: 23.02.2011
(73) Proprietor: Dentsply Implants NV, 3500 Hasselt (BE)
(72) Inventor: MALFLIET, Katja, B-3360 Bierbeek (BE); PATTIJN, Veerle, B-3472 Kersbeek-Miskom (BE); VAN LIERDE, Carl, B-9402 Meerbeke (BE)
(74) Representative: De Baere, Ivo
(86) International application number: PCT/EP2009/055180
(87) International publication number: WO 2009/133131

(56) References cited:
- WO-A-99/15100
- WO-A-2005/079699
- US-A1- 2004 172 150

## Description

### FIELD OF THE INVENTION

The present invention relates to the field of dentistry, and more particular to the use of computer technology for image-assisted risk assessment/evaluation of proposed dental treatments. The present invention in particular relates to a method and apparatus for determining the impact of a proposed dental modification on the temporomandibular joint(s), e.g. to obtain information relating to that impact.

The invention is also related to the use of a virtual articulator to determine the impact of a proposed dental modification on the temporomandibular joint(s). This dental modification includes, but is not limited to, the replacement of one or more teeth by artificial teeth, the replacement of one or more parts of a tooth by a prosthetic reconstruction such as a dental crown or veneer, the rearrangement of one or more existing teeth (orthodontic treatment), the distraction of one or both jaws in order to reposition the teeth (orthognatic treatment) and/or modifications of the occlusal surfaces of the teeth.

### BACKGROUND

Temporomandibular disorders or temporomandibular joint dysfunction (TMD) refer to conditions producing abnormal, incomplete, or impaired function of the temporomandibular joint(s) which can cause pain in the area of the temporomandibular joint (TMJ) and/or problems using the jaw. Typical causes are injuries to jaw, head or neck, diseases like arthritis, the patient's bite (i.e. the way teeth fit together), dental treatments, bruxism... which result in extreme stresses on the joint and its surroundings. Symptoms observed in patients who suffer from TMD can vary from headache, jaw clicking, limited jaw function to impaired hearing.

Temporomandibular joint disorders are mainly associated with the dorsal part of the meniscus (articulating disc) that separates the condyle from the temporal bone of the skull. This dorsal part of the meniscus is termed 'bilaminar zone'. In normal TMJ function, the intermediate part of the meniscus forms -both under static and dynamic conditions- the contact between the head of the condyle and the articular eminence. TMJ dysfunction is characterized by an anteriorly displaced meniscus, causing the bilaminar zone to serve as the articulating surface, a function for which it is not suitable. The dislocated meniscus causes discomfort and pain.

Dental modifications that for example force the condyles more or less posteriorly can provoke or fuel these effects and should therefore be avoided as much as possible. Unfortunately, the influence of a dental modification (e.g. prosthetic restoration, veneering, orthodontic treatment, orthognatic treatment...) on the temporomandibular joint is rarely investigated. This is mainly due to practical considerations since the temporomandibular joint cannot be assessed directly. The same applies for dental interventions which make use of a mechanical articulator, a device which represents the temporomandibular joint and jaws and to which physical models of the patient's upper and lower jaw are attached in order to simulate jaw movement. Mechanical articulators are either 'arcon' typed or 'non-arcon' typed. Arcon articulators are characterized by a lower frame which carry a pair of condylar replicas and an upper frame possessing guides which receive the condyles and permit the upper part to move. The condylar replicas thus always remain stationary on an arcon articulator. On non-arcon articulators, the reverse applies: the condylar replicas are attached to the upper frame which moves along the condylar guidance on the fixed lower frame.

Mechanical articulators are not suitable to determine the impact of a proposed dental modification on the temporomandibular joint(s). In both arcon and non-arcon articulator designs, the condylar path of movement never deviates from the constraining condylar guidance. It is exactly this deviation that is essential to determine whether a proposed dental modification will result in an increased risk of occurrence of TMD or further exacerbate a TMD disorder that was already present.

US Patent 4,836,218 (Method and apparatus for the acoustic detection and analysis of joint disorders) describes a non-invasive method and apparatus for detecting and analyzing joint disorders utilizing an acoustic signal processing technique, particularly well suited for differential diagnosis of the temporomandibular joint. The diagnostic procedure and apparatus graphically correlates joint induced sound patterns relative to the joint position in time and space thereby providing a quantitative approach for the diagnosis of specific joint disorders.

Patent application WO 2005/079699 A1 (A method and system for morphometric analysis of human dental occlusal function and uses thereof) describes a method for determining and predicting temporomandibular (TMJ) motion and to use the predictive model to prepare improved TMJ replacement joints, improved crowns, cap or bridge contouring, improved teeth alignments and placements, and improved mouth guard and dentures. The model predicts the motion of the mandibular condyle by a rotation around the instantaneous rotation axis which is determined based on a pivot condyle and the wear surfaces on two teeth, one on the posterior ipsi-lateral jaw and one on the anterior contralateral jaw. This model only considers the movement trajectory of the non-pivot condyle, which comes down to a rotation around the pivot-condyle, determined by at least two user-indicated planes of wear. Drawbacks of this model are the need for user interaction and the limited applicability since it only considers rotation of the jaw around a fixed-held condyle. This movement is not representative for the range of natural functional movements. Another drawback of the model mentioned is that its application is limited to patients who possess clearly visible worn occlusal surfaces since it would otherwise not be possible to indicate the contact planes.

A virtual articulator is capable of constructing a kinematic model of the jaw movement, thereby it is not limited to specific types of dentitions.

Canadian patent CA 2,350,839 (System and method for virtual articulator) claims a virtual articulator, described as a 3D representation of the upper and lower dental arches in spatial relation to each other, including data defining a constraint of motion between those upper and lower dental arches. Also claimed by this patent application are a simulation analyzer, said to simulate motion and to analyze resulting contacts on portions of upper and lower arches and a design module to design or modify a prosthesis using this contact data. The resulting contacts are points of contact or forces of contact.

US Patent 6,152,731 (Methods for use in dental articulation) claims a computer implemented method of creating a three dimensional dental model for use in dental articulation.

"Patent application WO 99/15100 (Methods for use in dental articulation) discloses a computer implemented method of creating a dental model for use in dental articulation includes providing a first set of digital data corresponding to an upper arch image of at least a portion of an upper dental arch of a patient, providing a second set of digital data corresponding to a lower arch image of at least a portion of a lower dental arch of the patient, and providing hinge axis data representative of the spatial orientation of at least one of the upper and lower dental arches relative to a condylar axis of the patient. A reference hinge axis is created relative to the upper and lower arch images based on the hinge axis data."

The known virtual articulators mentioned above are unsuitable for the purpose of the present invention since their aim is to either determine an optimal dental modification, where 'optimal' means best suited given one or more criteria related to the tooth contacts occurring at that particular dental modification. Moreover, since the virtual articulators of the above-mentioned patent applications only analyze the resulting tooth contacts, they do not allow proper determination of the impact of the dental modification on the temporomandibular joint(s).

### SUMMARY OF THE INVENTION

An object of the present invention is the provision of a virtual articulator not being limited to one particular movement of the jaw as well as methods of operating the same and software for carrying out the methods.

The virtual articulator and method used for the current invention starts from one or more given dental modifications and provides feedback, e.g. provides information, about their impact on the temporomandibular joint. As a result of this analysis, suggestions can be provided to the user in order to have an optimal impact related to an existing or a potential temporomandibular joint disorder. It is an advantage of the current invention to provide a virtual articulator which exhibits specific behaviour to take into account the influence of a dental treatment on the patient's temporomandibular joint.

The present invention is not limited to a specific type of dentition or a specific type of dental treatment. On the one hand, the invention applies to dental treatments which are specifically meant to treat a temporomandibular joint disorder. Their impact on the patient's temporomandibular joint can be assessed and information relating to alternative treatments can be compared in this respect. On the other hand, the invention also applies to dental modifications in general, providing the user information to estimate the risk of inducing a temporomandibular joint disorder. Thus the present invention relates in one aspect to non-diagnostic gaining of information about a patient's temporomandibular joint.

A virtual articulator is used to determine the impact of a proposed dental modification on the temporomandibular joint(s). An articulator is a mechanical instrument, which is used to examine the static and dynamic contact relationships between the occlusal surfaces of both dental arches. It mimics the human temporomandibular joints and jaws and consists of an upper and a lower member to which maxillary and mandibular casts may be attached in order to simulate some or all mandibular movements. Different settings regarding the jaw morphology and mandibular movement can be adjusted on a mechanical articulator. Those values are set using patient-specific data or average values known from literature.

A virtual articulator establishes the static and dynamic contact relationships in a virtual environment. The input for a virtual articulator is digital information of at least a part of the patient's upper and lower dentitions. This digital information can be obtained by several methods, e.g. a µCT scan of dental impressions, a µCT or optical scan of plaster casts, intra-oral scanning, medical CT or CBCT scanning... Digital information of (a part of) the patients upper and lower dentitions obtained in this ways is termed a 'digital model'. A virtual articulator simulates forward, backward, left lateral, right lateral, opening and closing mandibular movements as constrained by, on the one hand, the geometric restrictions imposed by the mathematical modeling of the temporomandibular joint and, on the other hand, the tooth contacts encountered during the movement (e.g. preventing the teeth from intersecting each other during movement). A virtual articulator is also compatible with data originating from electronic measurements of the patient's actual functional movements. Examples of such measuring systems are Condylocomp (Dentron, Germany) and the Jaw Motion Analyzer (Zebris, Germany). Apart from providing a playback of these movements, a virtual articulator is also capable of constructing a movement model based on this data in order to simulate mandibular movement in case a change has been made to the model(s) of the dentition.

A virtual articulator is able to visualize the simulated mandibular movement by a moving upper dentition (similar to the mechanical articulator where the upper part usually moves) or a moving lower dentition (similar to the anatomical situation).

The mathematical model of the temporomandibular joint included in a virtual articulator can be parametric and parameters can be set either using patient-specific data or average values known from literature. The same principle applies to the condylar guidance of the virtual articulator which represents the anatomical temporal fossa. Further a virtual articulator can include an exact model of the patient's temporomandibular joint (i.e. realistic geometry), which can be retrieved from patient specific images like CT, MRI...

A virtual articulator is also capable of calculating and visualizing the resulting occlusal contacts.

A virtual articulator can be extended to take into account muscle data (e.g. attachment points, muscle dimensions, activation levels...) in order to simulate the mandibular movement in an anatomical way, copying the real biomechanics of the jaws and the temporomandibular joints.

Moreover, a virtual articulator exhibits specific behaviour to gain information about, e.g. to analyze the impact of a dental treatment on the patient's temporomandibular joint, where this impact should be understood as inducing a temporomandibular joint disorder or worsening its symptoms and effects. The impact analysis can be done based on a diagnosis that was observed on the patient. Such a diagnosis describes in a quantitative or a qualitative way an undesired effect on the temporomandibular joint, caused by at least one parameter related to the movement of the jaw. Examples of such parameters are, but not limited to, the amount of jaw movement in a certain direction, the speed at which a certain jaw movement is carried out and the angle around which a rotational jaw movement is carried out. Examples of undesired effects that can be triggered are, but not limited to, joint sounds, muscle tenderness, the maximal range of mandibular motion and pain on palpation. Useful information or alternatively, a diagnosis, can either be observed directly or indirectly on the patient, where in the last case, the information can be gained or the diagnosis is made for example based on a medical image showing the anatomy of the patient's temporomandibular joint.

If medical information, e.g. a diagnosis, is available, it can be provided as an additional input to the virtual articulator of the current invention. The virtual articulator can then be used to evaluate any or all of these parameters when a dental modification is applied. Dependent on the presence or absence of one of the parameters causing an undesired effect as described by the diagnosis, the proposed dental modification can be categorised as being a safe or a non-safe dental modification. A 'safe' dental modification will not exceed the boundary or boundaries defined by the diagnosis and a 'non-safe' modification implies a risk for causing or aggravating TMD because of the occurrence of one of the parameters of the diagnosis.

The categorisation of the outcome can for example be realised by the visualisation of color codes representing safe and unsafe movement, the production of a noise signal and so on.

Suggestions can be provided to the user to alter a non-safe dental modification in order to make it safe.

If a diagnosis is not available or it is not provided as input, the virtual articulator of the current invention can still be used to assess the impact on the temporomandibular joint. In this situation, the evaluation results in a relative difference in condylar displacement between the existing dental context and the modified dental context, for each movement simulated. This relative condylar displacement characterizes the effect on each of the condyles of the modified dental context in comparison to the existing dental context. This difference provides useful information that can then be interpreted by the user.

Methods of the present invention are computer based. The present invention also provides a computer program product comprising code segments, which, when executed on a computing device implement any of the methods of the present invention.

### BRIEF DESCRIPTION OF THE DRAWINGS

Embodiments of the invention will be described, by way of example only, with reference to the accompanying drawings in which:

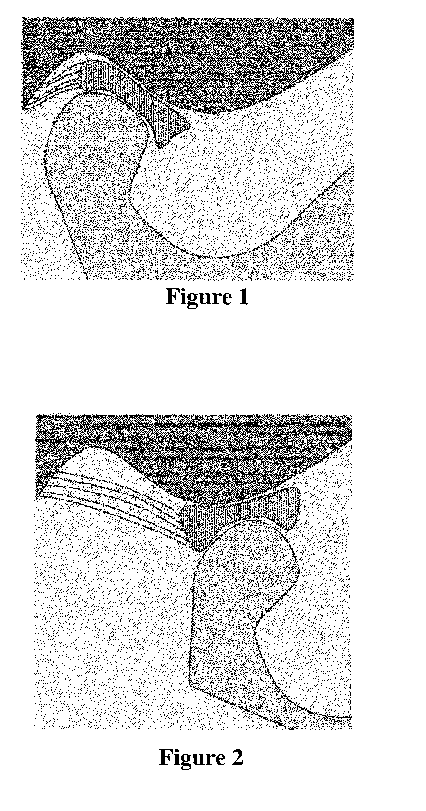

Figure 1 shows a schematic TMJ in static conditions where the meniscus is located normally, i.e. normal TMJ at rest;
Figure 2 shows a schematic TMJ in dynamic conditions: the meniscus forms the contact between the head of the condyle and the articular eminence, i.e. normal TMJ during movement;

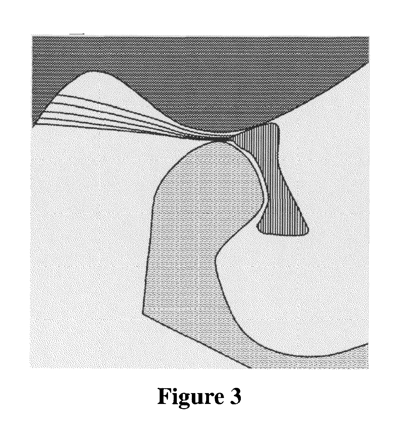

Figure 3 shows a schematic TMJ in dynamic conditions where the meniscus is dislocated, causing the bilaminar zone to serve as the articulating surface, i.e. an abnormal TMJ during movement;

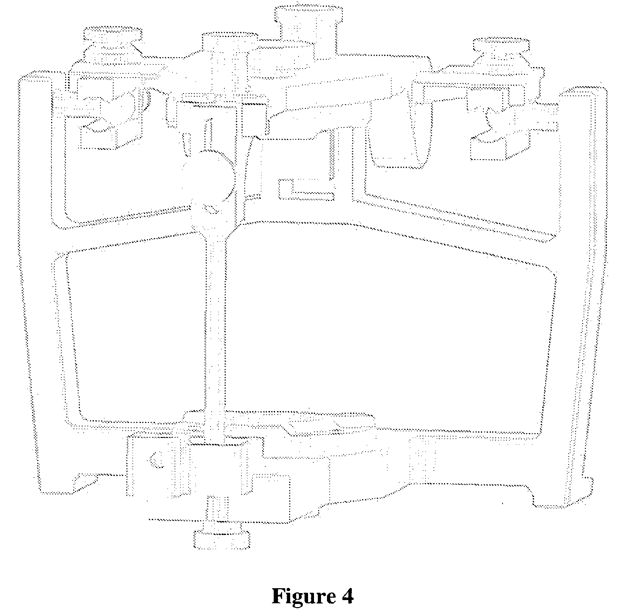

Figure 4 shows a mechanical articulator;

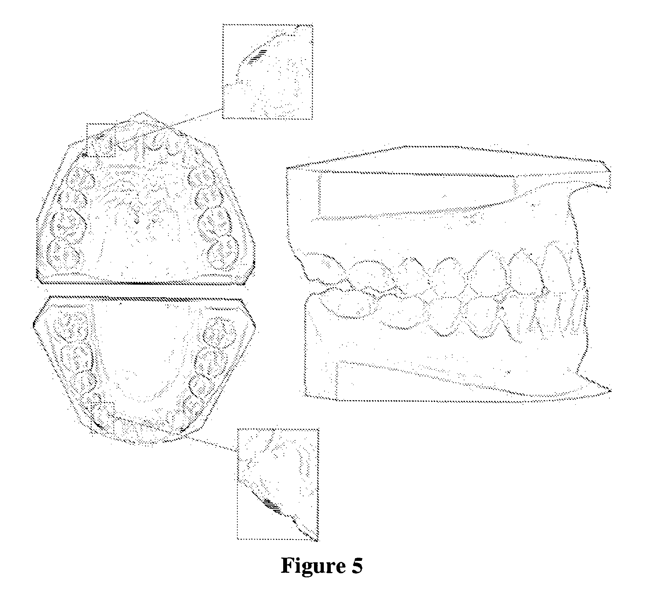

Figure 5 shows an example view of the virtual articulator.

### DESCRIPTION OF PREFERRED EMBODIMENTS

In the following detailed description of the preferred embodiments, reference is made to the accompanying drawings, which form a part hereof, and within which are shown by way of illustration specific embodiments by which the invention may be practiced. The drawings described are only schematic and are non-limiting. In the drawings, the size of some of the elements may be exaggerated and not drawn on scale for illustrative purposes. Those skilled in the art will recognize that other embodiments may be utilized and structural changes may be made to the described embodiments without departing from the scope of the invention. The scope of the invention is defined by the claims. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

In accordance with different embodiments of the present invention, a virtual articulator can be used in several ways to determine the impact of a proposed dental modification on the temporomandibular joint(s).

As an example, two ways of using such a virtual articulator will be explained as two separate embodiments of the invention.

A prerequisite for the use of a virtual articulator is digital information of at least a part of the patient's upper and/or lower dentitions. This information can be taken from physical reproductions like impressions or plaster casts, e.g. by taking an optical scan or a CT scan of an impression or digitising the information in any other way. He information can also be obtained directly from the patient, e.g. an Xray scan, a CT scan, an MRI scan, a PET scan, etc. Next, said digital information should be imported and positioned in the virtual articulator. Both a relative positioning of the upper and lower dentition with respect to each other and an absolute positioning of the upper and lower dentition in the virtual articulator should be performed. The relative positioning captures the patient's bite and can be obtained by a registration with a digitized bite registration or it can be done semiautomatically when a digitized bite registration is not available. The absolute positioning is meant to transfer the relation between the condyles and the maxilla from the patient to the articulator so that the model of the upper dentition is located in the same three-dimensional position with respect to the condylar replications on the articulator. Since the virtual articulator is used for calculating the resulting condylar displacement of a proposed dental treatment, it is obvious that this relation should correspond to the anatomical situation (as much as possible).

Several positioning options exist, including, but not limited to the following items:
- Positioning based on medical images (e.g. X-ray, CT, MRI, ...) showing both (a part of) the dentition and the temporomandibular joint. By registering the image's temporomandibular joints with the condylar replicas on the virtual articulator, a fully equivalent positioning to the anatomical situation is obtained.
- Positioning based on measurements taken directly on the patient or on photographs of the patient's face. These measurements start from the patient's condyles and measure the distance to at least three well-defined points on the upper dentition. The localisation of the patient's intercondylar axis is similar to the average or simple facebow which uses average anatomic landmarks. The well-defined points are identified on the digitized upper dentition which is positioned with respect to the intercondylar axis based on the measurements.
- Positioning based on average anatomical values. These positioning methods are similar to the ones used on a mechanical articulator when no facebow transfer is used.

An optional step in the use of the virtual articulator is the input of a diagnosis describing in a quantitative or a qualitative way the effect on (e.g. one or more of the symptoms of TMD / the temporomandibular joint) of at least one parameter related to the movement of the jaw. For this optional diagnostical input, the observed parameters are entered quantitatively or qualitatively or they can also be indicated on a schematic representation of the temporomandibular joint.

Next, jaw movements can be simulated with the virtual articulator. These movements are either generated by a kinematic model or they can be the playback of electronically measured movement data on the patient.

Either all or certain functional movements are executed and optionally, the tooth contact pattern is generated for each functional movement. Next, at least one dental modification is applied. This dental modification can be the result of a modification of this or another digital model of the patient's dentition (e.g. the rearrangement of one or more teeth, the adaptation of one or more the occlusal surfaces, the addition or removal of one or more teeth, ...). The virtual articulator is used with the same settings and the same functional movements are executed. Since the existing dentition has been changed, the tooth contacts during the movement may have changed also. The new tooth contacts are compared with the reference tooth contacts generated with the unmodified model (of the dentition) and the effect on any of the parameters as described in the diagnosis or the effect on the movement of the condyles is derived from this information. This method has the advantage that all functional movements available with the virtual articulator can be tried out and their impact on temporomandibular can be taken into consideration.

Another way of using a virtual articulator to determine the impact of a proposed dental modification on the temporomandibular joint(s) is by simulating the movement of the jaws when closing the mouth. Due to the occurring tooth contacts, the original rotational character gets an additional translational component causing a posterior displacement of the condyles. The closing movement is simulated on a virtual articulator both for the unmodified and the modified model. The amount of posterior displacement is compared in both situations and the relative difference is computed. The diagnosis that can serve as the input for this way of using the virtual articulator is TMJ and muscle palpation. Again such a diagnosis defines the boundary or boundaries of the 'safe' zone. Any dental modification that exceeds one of these boundaries will be categorised as 'non-safe'.

A virtual articulator provides a number of advantages over a mechanical articulator which makes it suitable determine the impact of a proposed dental modification on the temporomandibular joint(s). A virtual articulator is not limited by physical stops as is the case with a mechanical articulator. The condylar replicas on a mechanical articulator are restricted in their movements due to the physical boundaries of the simulated joint. This is for example the case for simulation of the movement when closing the jaws and prevents the plaster cast from moving into maximal occlusion. It is especially this boundary movement that is of interest for the current invention and which is possible with the virtual articulator of the current invention.

A typical mechanical articulator is also not suitable to take custom parts like a custom condylar replica or custom shaped temporal fossa. This is however possible with a virtual articulator.

Moreover, a virtual articulator allows to quantitatively compare a number of simulations easily because the simulated movements are reproducible, repeatable, durable and stable.

Irrespective of how the virtual articulator is used, at least the following steps will be performed to assess the impact of a proposed dental modification on the temporomandibular joint and the risk of causing/deteriorating a temporomandibular disorder. In case a diagnosis is available, the boundaries within which the parameters can vary safely, are known. For each of these parameters and for each proposed modification, the value of the parameter during the movement is compared with the boundaries. If the boundary of a certain parameter is exceeded, the dental modification will be categorised as non-safe.

In case no diagnosis is available, one or more virtual functional movements are simulated and the position and movement of the condyles is calculated, which represents their reference positions in the existing, untreated situation. One or more dental modifications are applied to the digital model and for each modification, the same one or more functional movements are simulated. Such dental modifications include, but are not limited to, the replacement of one or more teeth by artificial teeth, the replacement of one or more parts of a tooth by a prosthetic reconstruction such as a dental crown or veneer, the rearrangement of one or more existing teeth (orthodontic treatment), the distraction of one or both jaws in order to reposition the teeth (orthognatic treatment) and modifications of the occlusal surfaces of the teeth. For each dental modification, the difference in condylar position with respect to the untreated situation is considered for each contact point. When the difference reveals an anterior displacement of the tooth contact on the mandible or a posterior displacement of the tooth contact on the maxilla, the contact point is labeled negative, together with the value of anterior or posterior displacement. Similar, the contact point is labeled positive when the difference reveals a posterior displacement of the tooth contact on the mandible or an anterior displacement of the tooth contact on the maxilla. The overall effect is calculated as the sum of all signed, quantified displacements during the movement. A positive end result should be interpreted as having no harm in contributing to TMD. For a negative end result, the user can decide based on the amount of displacement of the condyles, whether the dental modification is allowable (i.e. does not include the risk for TMD) or not. This method default works with positive and negative values, assuming that the risk of temporomandibular joint disorder is triggered when the condyles displace posteriorly. In this respect, the user can also predefine ranges of values that will be used to automatically interpret the positive or negative outcome as being for example safe, risky, not safe and so on.

It is also possible to combine the digital models of the upper and lower dentition with data obtained from CT images of the jaw. This data can either be used to optimize certain parameters of the kinematic model or it can be used directly in the calculations as such, i.e. to have a realistic temporomandibular joint (condyles and temporal fossa). This allows a more detailed analysis of the impact of the dental treatment on the jaw joint, for example the physical boundaries of the anatomical structure that guide the condyles can be taken into account when the relative condylar displacement is calculated.

The methods and virtual articulator of the present invention can be implemented on a computing system which can be utilized with the methods and in a system according to the present invention including computer programs. A computer may include a video display terminal, a data input means such as a keyboard, and a graphic user interface indicating means such as a mouse. Computer may be implemented as a general purpose computer, e.g. a UNIX workstation or a personal computer.

Typically, the computer includes a Central Processing Unit ("CPU"), such as a conventional microprocessor of which a Pentium processor supplied by Intel Corp. USA is only an example, and a number of other units interconnected via bus system. The bus system may be any suitable bus system. The computer includes at least one memory. Memory may include any of a variety of data storage devices known to the skilled person such as random-access memory ("RAM"), read-only memory ("ROM"), non-volatile read/write memory such as a hard disc as known to the skilled person. For example, computer may further include random-access memory ("RAM"), read-only memory ("ROM"), as well as a display adapter for connecting system bus to a video display terminal, and an optional input/output (I/O) adapter for connecting peripheral devices (e.g., disk and tape drives) to system bus. The video display terminal can be the visual output of computer, which can be any suitable display device such as a CRT-based video display well-known in the art of computer hardware. However, with a desk-top computer, a portable or a notebook-based computer, video display terminal can be replaced with a LCD-based or a gas plasma-based flat-panel display. Computer further includes user an interface adapter for connecting a keyboard, mouse, optional speaker. The relevant data required the digital model may be input directly into the computer using the keyboard or from storage devices, after which a processor carries out a method in accordance with the present invention. The relevant data may be provided on a suitable signal storage medium such as a diskette, a replaceable hard disc, an optical storage device such as a CD-ROM or DVD-ROM, a magnetic tape or similar. The results of the method may be transmitted to a further near or remote location. A communications adapter may connect the computer to a data network such as the Internet, an Intranet a Local or Wide Area network (LAN or WAN) or a CAN.

The computer also includes a graphical user interface that resides within machine-readable media to direct the operation of the computer. Any suitable machine-readable media may retain the graphical user interface, such as a random access memory (RAM), a read-only memory (ROM), a magnetic diskette, magnetic tape, or optical disk (the last three being located in disk and tape drives). Any suitable operating system and associated graphical user interface (e.g., Microsoft Windows, Linux) may direct the CPU. In addition, the computer includes a control program that resides within computer memory storage. The control program contains instructions that when executed on the CPU allow the computer to carry out the operations described with respect to any of the methods of the present invention.

The present invention also provides a computer program product for carrying out the method of the present invention and this can reside in any suitable memory. However, it is important that while the present invention has been, and will continue to be, that those skilled in the art will appreciate that the mechanisms of the present invention are capable of being distributed as a computer program product in a variety of forms, and that the present invention applies equally regardless of the particular type of signal bearing media used to actually carry out the distribution. Examples of computer readable signal bearing media include: recordable type media such as floppy disks and CD ROMs and transmission type media such as digital and analogue communication links.

Accordingly, the present invention also includes a software product which when executed on a suitable computing device carries out any of the methods of the present invention. Suitable software can be obtained by programming in a suitable high level language such as C and compiling on a suitable compiler for the target computer processor or in an interpreted language such as Java and then compiled on a suitable compiler for implementation with the Java Virtual Machine.

The present invention provides software, e.g. a computer program having code segments that provide a program that, when executed on a processing engine, provides a virtual simulation of an articulator. The software may include code segments that provide, when executed on the processing engine: loading a digital dental model of a patient into a computer running the virtual articulator simulation program. The software may include code segments that provide, when executed on the processing engine, simulation of one or more virtual functional movements. The software may also include code segments that provide, when executed on the processing engine, evaluation of at least one parameter related to the movement of the jaw when a dental modification is applied, the at least one parameter related to the movement of the jaw being selected from at least the amount of jaw movement in a certain direction, the speed at which a certain jaw movement is carried out and an angle around which a rotational jaw movement is carried out. The software may include code segments that provide, when executed on the processing engine: calculation of the position and movement of the condyles, which represents their reference positions in an existing, untreated situation, as well as application of one or more dental modifications to the digital model and for each modification, the same one or more functional movements are simulated whereby for each dental modification, the difference in condylar position with respect to the untreated situation is considered for each contact point. The software may include code segments that provide, when executed on the processing engine, a labelling such that when the difference reveals an anterior displacement of the tooth contact on the mandible or a posterior displacement of the tooth contact on the maxilla, the contact point is labeled negative, together with the value of anterior or posterior displacement, and the contact point is labeled positive when the difference reveals a posterior displacement of the tooth contact on the mandible or an anterior displacement of the tooth contact on the maxilla. The software may include code segments that provide, when executed on the processing engine, calculation of the overall effect as the sum of all signed, quantified displacements during the movement. The software may include code segments that provide, when executed on the processing engine: a replacement when the dental modifications include replacement of one or more teeth by artificial teeth, the replacement being of one or more parts of a tooth by a prosthetic reconstruction such as a dental crown or veneer, the rearrangement of one or more existing teeth (orthodontic treatment), the distraction of one or both jaws in order to reposition the teeth (orthognatic treatment) or modifications of the occlusal surfaces of the teeth. The software may include code segments that provide, when executed on the processing engine, combination of digital models of the upper and lower dentition of the patient with data obtained from a volumetric scan of the jaw.

The software may include code segments that provide, when executed on the processing engine, use of the data either to optimize certain parameters of the model or use directly in the calculations as such. The software may include code segments that provide, when executed on the processing engine, that the virtual articulator simulates forward, backward, left lateral, right lateral, opening and closing mandibular movements as constrained by, on the one hand, the geometric restrictions imposed by the mathematical modeling of the temporomandibular joint and, on the other hand, the tooth contacts encountered during the movement. The software may include code segments that provide, when executed on the processing engine, a playback of movements. The software may include code segments that provide, when executed on the processing engine, construction of a movement model based on the data in order to simulate mandibular movement following a change to the model(s) of the dentition. The software may include code segments that provide, when executed on the processing engine, visualization of the simulated mandibular movement by a moving upper dentition or a moving lower dentition. The software may include code segments that provide, when executed on the processing engine: calculation and visualizing of the occlusal contacts. The software may include code segments that provide, when executed on the processing engine: simulation of the mandibular movement in an anatomical way that copies the real biomechanics of the jaws and the temporomandibular joints by taking into account muscle data. The software may include code segments that provide, when executed on the processing engine: visualisation of color codes representing safe and unsafe movement.

## Claims

1. A method for assessing an impact of a proposed dental modification on a temporomandibular joint of a patient, the method comprising:
- loading a digital dental model of the patient into a computer running a virtual articulator simulation program,
- simulating one or more virtual functional movements of a jaw of the patient on said computer,
- applying said proposed dental modification to the digital model in the computer,
- simulating on said computer said one or more virtual functional movements for said proposed dental modification,
**characterized in that** the method further comprises
- providing by said computer information to a user on at least one parameter related to said one or more virtual functional movements when said proposed dental modification is applied, said at least one parameter being selected from at least the amount of jaw movement in a certain direction, the speed at which a certain jaw movement is carried out and an angle around which a rotational jaw movement is carried out, and wherein said information is for said assessing said impact of said proposed dental modification on said temporomandibular joint of said patient, wherein said at least one parameter related to said one or more virtual functional movements is a displacement of a condyle of said patient, the method further comprising:
- calculating by said computer a first displacement of said condyle for each of said one or more virtual functional movements before said applying said proposed dental modification to the digital model,
- calculating by said computer a second displacement of said condyle for each of said one or more virtual functional movements after said applying said proposed dental modification to the digital model,
- determining by said computer a relative difference in condylar displacement from said second and said first displacement, for each of said one or more virtual functional movements,
- providing by said computer for each of said one or more virtual functional movements said relative difference in condylar displacement to said user, for said assessing said impact of said proposed dental modification on said temporomandibular joint of said patient,
the method further comprising, for each one of said one or more virtual functional movements:
- determining by said computer all tooth contact points for said each one virtual functional movement,
- considering for each of said tooth contact points a difference in condylar position between a situation after applying said proposed dental modification and an untreated situation, before applying said proposed dental modification,
- labeling by said computer, for each of said tooth contact points, said tooth contact point negative when said difference in condylar position reveals an anterior displacement of the tooth contact on the mandible or a posterior displacement of the tooth contact on the maxilla, together with the value of anterior or posterior displacement, and
- labeling by said computer said tooth contact point positive, together with the value of anterior or posterior displacement, when the difference reveals a posterior displacement of the tooth contact on the mandible or an anterior displacement of the tooth contact on the maxilla,
- calculating by said computer an overall effect as a sum of all signed, quantified displacements during said each one virtual functional movement,
- providing by said computer said sum to said user for said assessing said impact of said proposed dental modification on said temporomandibular joint of said patient.

2. The method of claim 1, further comprising:
- inputting to said computer a diagnosis describing an undesired effect on said temporomandibular joint of said patient caused by said at least one parameter related to said one or more virtual functional movements of said jaw of said patient,
- receiving by said computer, based on said diagnosis, boundaries within which said at least one parameter may vary safely,
- comparing by said computer a value of said at least one parameter with said boundaries when said proposed dental modification is applied,
- categorising by said computer said proposed dental modification as unsafe if said value exceeds a boundary out of said boundaries.

3. The method of claim 1 wherein said proposed dental modification includes replacement of one or more teeth by artificial teeth, replacement of one or more parts of a tooth by a prosthetic reconstruction such as a dental crown or veneer, a rearrangement of one or more existing teeth (orthodontic treatment), a distraction of one or both jaws in order to reposition the teeth (orthognatic treatment) or modifications of occlusal surfaces of the teeth.

4. The method according to any previous claim further comprising simulating by said computer forward, backward, left lateral, right lateral, opening and closing mandibular movements as constrained by, on the one hand, geometric restrictions imposed by mathematical modeling of the temporomandibular joint and, on the other hand, tooth contacts encountered during the movement.

5. The method of any previous claim, further comprising constructing by said computer a movement model to simulate mandibular movement following said proposed dental modification.

6. The method claim 5, further comprising simulating by said computer the mandibular movement in an anatomical way that copies the real biomechanics of both jaws and both temporomandibular joints of the patient by taking into account muscle data.

7. A computer based virtual articulator for assessing an impact of a proposed dental modification on a temporomandibular joint of a patient, the computer based virtual articulator comprising:
- means for loading a digital dental model of the patient into a computer running a virtual articulator simulation program,
- means for simulating one or more virtual functional movements of a jaw of the patient,
- means for applying said proposed dental modification to the digital model,
- means for simulating said one or more virtual functional movements for said proposed dental modification,
**characterized in that** the computer based virtual articulator further comprises:
- means of providing information to a user on at least one parameter related to said one or more virtual functional movements when said proposed dental modification is applied, said at least one parameter being selected from at least the amount of jaw movement in a certain direction, the speed at which a certain jaw movement is carried out and an angle around which a rotational jaw movement is carried out, and wherein said information is for said assessing said impact of said proposed dental modification on said temporomandibular joint of said patient, wherein said at least one parameter related to said one or more virtual functional movements is a displacement of a condyle of said patient, the virtual articulator further comprising:
- means for calculating a first displacement of said condyle for each of said one or more virtual functional movements before application of said proposed dental modification to the digital model,
- means for calculating a second displacement of said condyle for each of said one or more virtual functional movements after application of said proposed dental modification to the digital model,
- means for determining a relative difference in condylar displacement from said second and said first displacement, for each of said one or more virtual functional movements,
- means for providing for each of said one or more virtual functional movements said relative difference in condylar displacement to said user, for said assessing said impact of said proposed dental modification on said temporomandibular joint of said patient,
the virtual articulator further comprising, for each one of said one or more virtual functional movements, means:
- for determining all tooth contact points for said each one virtual functional movement,
- for considering for each of said tooth contact points a difference in condylar position between a situation after said application of said proposed dental modification and an untreated situation, before said application of said proposed dental modification,
- for labeling, for each of said tooth contact points, said tooth contact point negative when said difference in condylar position reveals an anterior displacement of the tooth contact on the mandible or a posterior displacement of the tooth contact on the maxilla, together with the value of anterior or posterior displacement, and
- for labeling said tooth contact point positive, together with the value of anterior or posterior displacement, when the difference reveals a posterior displacement of the tooth contact on the mandible or an anterior displacement of the tooth contact on the maxilla,
- for calculating an overall effect as a sum of all signed, quantified displacements during said each one virtual functional movement,
- for providing said sum to said user for said assessing said impact of said proposed dental modification on said temporomandibular joint of said patient.

8. The virtual articulator of claim 7 further comprising:
- means for inputting a diagnosis describing an undesired effect on said temporomandibular joint of said patient caused by said at least one parameter related to said one or more virtual functional movements of said jaw of said patient,
- means for receiving, based on said diagnosis, boundaries within which said at least one parameter may vary safely,
- means for comparing a value of said at least one parameter with said boundaries when said proposed dental modification is applied,
- means for categorising said proposed dental modification as unsafe if said value exceeds a boundary out of said boundaries.

9. The virtual articulator of claim 7, wherein said proposed dental modification includes replacement of one or more teeth by artificial teeth, replacement of one or more parts of a tooth by a prosthetic reconstruction such as a dental crown or veneer, a rearrangement of one or more existing teeth (orthodontic treatment), a distraction of one or both jaws in order to reposition the teeth (orthognatic treatment) or modifications of occlusal surfaces of the teeth.

10. The virtual articulator of any of the claims 7 to 9, further comprising means for simulating the mandibular movement in an anatomical way that copies the real biomechanics of both jaws and both temporomandibular joints of the patient by taking into account muscle data.

11. A computer program product comprising code segments that when implemented on a computing system implement the methods of any of the claims 1 to 6.

## Patentansprüche

1. Verfahren zum Beurteilen einer Auswirkung einer vorgeschlagenen dentalen Änderung auf ein Kiefergelenk eines Patienten, wobei das Verfahren folgende Schritte umfasst:
- Laden eines digitalen dentalen Modells des Patienten auf einen Computer, auf dem ein virtuelles Gelenksimulationsprogramm abläuft,
- Simulieren einer oder mehrerer Funktionsbewegung(en) eines Kiefers des Patienten auf dem Computer,
- Anwenden der vorgeschlagenen dentalen Änderung auf das digitale Modell auf dem Computer,
- Simulieren auf dem Computer der einen oder mehreren virtuellen Funktionsbewegung(en) für die vorgeschlagene dentale Änderung,
**dadurch gekennzeichnet, dass** das Verfahren ferner folgende Schritte umfasst:
- Bereitstellen durch den Computer von Informationen an einem Benutzer über mindestens einen Parameter bezüglich der einen oder mehreren virtuellen Funktionsbewegung(en), wenn die vorgeschlagene dentale Änderung angewendet wird, wobei der mindestens eine Parameter aus mindestens dem Ausmaß an Kieferbewegung in eine bestimmte Richtung, der Geschwindigkeit, mit der eine bestimmte Kieferbewegung ausgeführt wird, und einem Winkel, um den eine drehende Kieferbewegung ausgeführt wird, ausgewählt wird, und wobei die Informationen zum Beurteilen der Auswirkung der vorgeschlagenen dentalen Änderung auf das Kiefergelenk des Patienten dienen, wobei der mindestens eine Parameter bezüglich der einen oder mehreren virtuellen Funktionsbewegung(en) eine Verlagerung eines Kondylus des Patienten ist, wobei das Verfahren ferner folgende Schritte umfasst:
- Berechnen durch den Computer einer ersten Verlagerung des Kondylus für jede der einen oder mehreren virtuellen Funktionsbewegung(en) vor dem Anwenden der vorgeschlagenen dentalen Änderung auf das digitale Modell,
- Berechnen durch den Computer einer zweiten Verlagerung des Kondylus für jede der einen oder mehreren virtuellen Funktionsbewegung(en) nach dem Anwenden der vorgeschlagenen dentalen Änderung auf das digitale Modell,
- Bestimmen durch den Computer eines relativen Unterschieds der Kondylenverlagerung gegenüber der ersten und zweiten Verlagerung für jede der einen oder mehreren virtuellen Funktionsbewegung(en),
- Bereitstellen durch den Computer für jede der einen oder mehreren virtuellen Funktionsbewegung(en) des relativen Unterschieds der Kondylenverlagerung an dem Benutzer, für das Beurteilen der Auswirkung der vorgeschlagenen dentalen Änderung auf das Kiefergelenk des Patienten,
wobei das Verfahren ferner für jede von der einen oder den mehreren virtuellen Funktionsbewegung(en) folgende Schritte umfasst:
- Bestimmen durch den Computer aller Zahnkontaktpunkte für jede einzelne virtuelle Funktionsbewegung,
- Berücksichtigen für jeden der Zahnkontaktpunkte eines Unterschieds der Kondylenposition zwischen einer Situation nach dem Anwenden der vorgeschlagenen dentalen Änderung und einer unbehandelten Situation, vor dem Anwenden der vorgeschlagenen dentalen Änderung,
- Bezeichnen durch den Computer, für jeden der Zahnkontaktpunkte, des Zahnkontaktpunktes als negativ, wenn der Unterschied der Kondylenposition eine anteriore Verlagerung des Zahnkontakts auf dem Unterkiefer oder eine posteriore Verlagerung des Zahnkontakts auf dem Oberkiefer offenbart, zusammen mit dem Wert der anterioren oder posterioren Verlagerung, und
- Bezeichnen durch den Computer des Zahnkontaktpunktes als positiv, zusammen mit dem Wert der anterioren oder posterioren Verlagerung, wenn der Unterschied eine posteriore Verlagerung des Zahnkontakts auf dem Unterkiefer oder eine anteriore Verlagerung des Zahnkontakts auf dem Oberkiefer offenbart,
- Berechnen durch den Computer eines Gesamteffekts als Summe aller mit Vorzeichen versehenen quantifizierten Verlagerungen während jeder einzelnen virtuellen Funktionsbewegung,
- Bereitstellen durch den Computer der Summe an dem Benutzer für das Beurteilen der Auswirkung der vorgeschlagenen dentalen Änderung auf das Kiefergelenk des Patienten.

2. Verfahren nach Anspruch 1, ferner umfassend folgende Schritte:
- Eingeben in den Computer einer Diagnose, die eine unerwünschte Wirkung auf das Kiefergelenk des Patienten beschreibt, die durch den mindestens einen Parameter bezüglich der einen oder mehreren virtuellen Funktionsbewegung(en) des Kiefers des Patienten bewirkt wird,
- Empfangen durch den Computer, basierend auf der Diagnose, von Grenzen, in denen der mindestens eine Parameter sicher variieren darf,
- Vergleichen durch den Computer eines Wertes des mindestens einen Parameters mit den Grenzen, wenn die vorgeschlagene dentale Änderung angewendet wird,
- Einstufen durch den Computer der vorgeschlagenen dentalen Änderung als unsicher, wenn der Wert eine Grenze außerhalb der Grenzen überschreitet.

3. Verfahren nach Anspruch 1, wobei die vorgeschlagene dentale Änderung den Ersatz eines Zahns oder mehrerer Zähne durch künstliche Zähne, den Ersatz eines oder mehrerer Teile eines Zahns durch eine prothetische Rekonstruktion, wie etwa eine Zahnkrone oder ein Veneer, eine Neuanordnung eines oder mehrerer vorhandener Zähne (orthodontische Behandlung), eine Distraktion eines oder beider Kiefer, um die Zähne neu zu positionieren (orthognathe Behandlung) oder Änderungen von Okklusionsflächen der Zähne umfasst.

4. Verfahren nach einem der vorhergehenden Ansprüche, ferner umfassend das Simulieren durch den Computer von Unterkieferbewegungen nach vorne, nach hinten, zur linken Seite, zur rechten Seite, zum Öffnen und zum Schließen, wie sie einerseits durch geometrische Einschränkungen, die durch mathematische Modellierung des Kiefergelenks vorgeschrieben sind, und andererseits durch Zahnkontakte, die während der Bewegung vorkommen, beschränkt sind.

5. Verfahren nach einem der vorhergehenden Ansprüche, ferner umfassend das Konstruieren durch den Computer eines Bewegungsmodells, um eine Unterkieferbewegung auf die vorgeschlagene dentale Änderung folgend zu simulieren.

6. Verfahren nach Anspruch 5, ferner umfassend das Simulieren durch den Computer der Unterkieferbewegung auf eine anatomische Art, welche die wirkliche Biomechanik der beiden Kiefer und der beiden Kiefergelenke des Patienten kopiert, wobei sie Muskeldaten berücksichtigt.

7. Computerbasierter virtueller Artikulator zum Beurteilen einer Auswirkung einer vorgeschlagenen dentalen Änderung auf ein Kiefergelenk eines Patienten, wobei der computerbasierte virtuelle Artikulator Folgendes umfasst:
- Mittel zum Laden eines digitalen Zahnmodells des Patienten auf einen Computer, der ein Simulationsprogramm eines virtuellen Artikulators ausführt,
- Mittel zum Simulieren einer oder mehrerer Funktionsbewegung(en) eines Kiefers des Patienten,
- Mittel zum Anwenden der vorgeschlagenen dentalen Änderung auf das digitale Modell,
- Mittel zum Simulieren der einen oder mehreren virtuellen Funktionsbewegung(en) für die vorgeschlagene dentale Änderung,
**dadurch gekennzeichnet, dass** der computerbasierte virtuelle Artikulator ferner Folgendes umfasst:
- Mittel zum Bereitstellen von Informationen an einem Benutzer über mindestens einen Parameter bezüglich der einen oder mehreren virtuellen Funktionsbewegung(en), wenn die vorgeschlagene dentale Änderung angewendet wird, wobei der mindestens eine Parameter aus mindestens dem Ausmaß an Kieferbewegung in eine bestimmte Richtung, der Geschwindigkeit, mit der eine bestimmte Kieferbewegung ausgeführt wird, und einem Winkel, um den eine drehende Kieferbewegung ausgeführt wird, ausgewählt wird, und wobei die Informationen zum Beurteilen der Auswirkung der vorgeschlagenen dentalen Änderung auf das Kiefergelenk des Patienten dienen, wobei der mindestens eine Parameter bezüglich der einen oder mehreren virtuellen Funktionsbewegung(en) eine Verlagerung eines Kondylus des Patienten ist, wobei der virtuelle Artikulator ferner Folgendes umfasst:
- Mittel zum Berechnen einer ersten Verlagerung des Kondylus für jede der einen oder mehreren virtuellen Funktionsbewegung(en) vor der Anwendung der vorgeschlagenen dentalen Änderung auf das digitale Modell,
- Mittel zum Berechnen einer zweiten Verlagerung des Kondylus für jede der einen oder mehreren virtuellen Funktionsbewegung(en) nach der Anwendung der vorgeschlagenen dentalen Änderung auf das digitale Modell,
- Mittel zum Bestimmen eines relativen Unterschieds der Kondylenverlagerung gegenüber der zweiten und der ersten Verlagerung für jede der einen oder mehreren virtuellen Funktionsbewegung(en),
- Mittel zum Bereitstellen für jede der einen oder mehreren virtuellen Funktionsbewegung(en) des relativen Unterschieds der Kondylenverlagerung an dem Benutzer für das Beurteilen der Auswirkung der vorgeschlagenen dentalen Änderung auf das Kiefergelenk des Patienten,
wobei der virtuelle Artikulator ferner für jede der einen oder mehreren virtuellen Funktionsbewegung(en) Mittel umfasst zum:
- Bestimmen aller Zahnkontaktpunkte für jede einzelne virtuelle Funktionsbewegung,
- Berücksichtigen für jeden der Zahnkontaktpunkte eines Unterschieds der Kondylenposition zwischen einer Situation nach der Anwendung der vorgeschlagenen dentalen Änderung und einer unbehandelten Situation, vor der Anwendung der vorgeschlagenen dentalen Änderung,
- Bezeichnen, für jeden der Zahnkontaktpunkte, des Zahnkontaktpunktes als negativ, wenn der Unterschied der Kondylenposition eine anteriore Verlagerung des Zahnkontakts auf dem Unterkiefer oder eine posteriore Verlagerung des Zahnkontakts auf dem Oberkiefer offenbart, zusammen mit dem Wert der anterioren oder posterioren Verlagerung, und
- Bezeichnen des Zahnkontaktpunkts als positiv, zusammen mit dem Wert der anterioren oder posterioren Verlagerung, wenn der Unterschied eine posteriore Verlagerung des Zahnkontakts auf dem Unterkiefer oder eine anteriore Verlagerung des Zahnkontakts auf dem Oberkiefer offenbart,
- Berechnen eines Gesamteffekts als Summe aller mit Vorzeichen versehenen quantifizierten Verlagerungen während jeder einzelnen virtuellen Funktionsbewegung,
- Bereitstellen der Summe an dem Benutzer für das Beurteilen der Auswirkung der vorgeschlagenen dentalen Änderung auf das Kiefergelenk des Patienten.

8. Virtueller Artikulator nach Anspruch 7, ferner umfassend:
- Mittel zum Eingeben einer Diagnose, die eine unerwünschte Wirkung auf das Kiefergelenk des Patienten beschreibt, die durch den mindestens einen Parameter bezüglich der einen oder mehreren virtuellen Funktionsbewegung(en) des Kiefers des Patienten bewirkt wird,
- Mittel zum Empfangen, basierend auf der Diagnose, von Grenzen, in denen der mindestens eine Parameter sicher variieren darf,
- Mittel zum Vergleichen eines Wertes des mindestens einen Parameters mit den Grenzen, wenn die vorgeschlagene dentale Änderung angewendet wird,
- Mittel zum Einstufen der vorgeschlagenen dentalen Änderung als unsicher, wenn der Wert eine Grenze außerhalb der Grenzen überschreitet.

9. Virtueller Artikulator nach Anspruch 7, wobei die vorgeschlagene dentale Änderung den Ersatz eines Zahns oder mehrerer Zähne durch künstliche Zähne, den Ersatz eines oder mehrere Teile eines Zahns durch eine prothetische Rekonstruktion, wie etwa eine Zahnkrone oder ein Veneer, eine Neuanordnung eines oder mehrerer vorhandener Zähne (orthodontische Behandlung), eine Distraktion eines oder beider Kiefer, um die Zähne neu zu positionieren (orthognathe Behandlung) oder Änderungen von Okklusionsflächen der Zähne umfasst.

10. Virtueller Artikulator nach einem der Ansprüche 7 bis 9, ferner umfassend Mittel zum Simulieren der Unterkieferbewegung auf eine anatomische Art, welche die wirkliche Biomechanik der beiden Kiefer und der beiden Kiefergelenke des Patienten simuliert, wobei sie Muskeldaten berücksichtigt.

11. Computerprogrammprodukt, umfassend Codesegmente, die, wenn sie auf einem Computersystem umgesetzt werden, die Verfahren nach einem der Ansprüche 1 bis 6 umsetzen.

## Revendications

1. Procédé pour évaluer un impact d'une modification dentaire proposée sur une articulation temporo-mandibulaire d'un patient, le procédé comprenant :
- le chargement d'un modèle dentaire numérique du patient dans un ordinateur exécutant un programme de simulation d'articulateur virtuel,
- la simulation d'un ou plusieurs mouvement(s) fonctionnel(s) virtuel(s) d'une mâchoire du patient sur ledit ordinateur,
- l'application de ladite modification dentaire proposée au modèle numérique dans l'ordinateur,
- la simulation sur ledit ordinateur dudit/desdits un ou plusieurs mouvement(s) fonctionnel(s) virtuel(s) pour ladite modification dentaire proposée,
**caractérisé en ce que** le procédé comprend en outre
- la fourniture à un utilisateur par ledit ordinateur d'informations concernant au moins un paramètre lié audit/auxdits un ou plusieurs mouvement(s) fonctionnel(s) virtuel(s) lorsque ladite modification dentaire proposée est appliquée, ledit au moins un paramètre étant sélectionné à partir d'au moins la quantité de mouvement de mâchoire dans une certaine direction, la vitesse à laquelle un certain mouvement de mâchoire est effectué et un angle autour duquel un mouvement rotatif de mâchoire est effectué, et dans lequel lesdites informations servent à ladite évaluation dudit impact de ladite modification dentaire proposée sur ladite articulation temporo-mandibulaire dudit patient, dans lequel ledit au moins un paramètre lié audit/auxdits un ou plusieurs mouvement(s) fonctionnel(s) virtuel(s) est un déplacement d'un condyle dudit patient, le procédé comprenant en outre :
- le calcul par ledit ordinateur d'un premier déplacement dudit condyle pour chacun dudit/desdits un ou plusieurs mouvement(s) fonctionnel(s) virtuel(s) avant ladite application de ladite modification dentaire proposée au modèle numérique,
- le calcul par ledit ordinateur d'un second déplacement dudit condyle pour chacun dudit/desdits un ou plusieurs mouvement(s) fonctionnel(s) virtuel(s) après ladite application de ladite modification dentaire proposée au modèle numérique,
- la détermination par ledit ordinateur d'une différence relative du déplacement condylien par rapport audit second et audit premier déplacement, pour chacun dudit/desdits un ou plusieurs mouvement(s) fonctionnel(s) virtuel(s),
- la fourniture audit utilisateur par ledit ordinateur pour chacun dudit/desdits un ou plusieurs mouvement(s) fonctionnel(s) virtuel(s) de ladite différence relative du déplacement condylien, pour ladite évaluation dudit impact de ladite modification dentaire proposée sur ladite articulation temporo-mandibulaire dudit patient,
le procédé comprenant en outre, pour chacun dudit/desdits un ou plusieurs mouvement(s) fonctionnel(s) virtuel(s) :
- la détermination par ledit ordinateur de tous les points de contact de dent pour chaque dit mouvement fonctionnel virtuel,
- la considération pour chacun desdits points de contact de dent d'une différence de position condylienne entre une situation après application de ladite modification dentaire proposée et d'une situation non traitée, avant application de ladite modification dentaire proposée,
- le marquage par ledit ordinateur, pour chacun desdits points de contact de dent, dudit point de contact de dent négatif quand ladite différence de position condylienne révèle un déplacement antérieur du contact de dent sur la mandibule ou un déplacement postérieur du contact de dent sur le maxillaire, en même temps que la valeur de déplacement antérieur ou postérieur, et
- le marquage par ledit ordinateur dudit point de contact de dent positif, en même temps que la valeur de déplacement antérieur ou postérieur, lorsque la différence révèle un déplacement postérieur du contact de dent sur la mandibule ou un déplacement antérieur du contact de dent sur le maxillaire,
- le calcul par ledit ordinateur d'un effet global en tant qu'une somme de tous les déplacements signés, quantifiés pendant chaque dit mouvement fonctionnel virtuel,
- la fourniture audit utilisateur par ledit ordinateur de ladite somme pour ladite évaluation dudit impact de ladite modification dentaire proposée sur ladite articulation temporo-mandibulaire dudit patient.

2. Procédé selon la revendication 1, comprenant en outre :
- l'entrée dans ledit ordinateur d'un diagnostic décrivant un effet non-souhaité sur ladite articulation temporo-mandibulaire dudit patient provoqué par ledit au moins un paramètre lié audit/auxdits un ou plusieurs mouvement(s) fonctionnel(s) virtuel(s) de ladite mâchoire dudit patient,
- la réception par ledit ordinateur, sur base dudit diagnostic, de limites à l'intérieur desquelles ledit au moins un paramètre peut varier sans risque,
- la comparaison par ledit ordinateur d'une valeur dudit au moins un paramètre auxdites limites lorsque ladite modification dentaire proposée est appliquée,
- la catégorisation par ledit ordinateur de ladite modification dentaire proposée comme étant risquée si ladite valeur dépasse une limite parmi lesdites limites.

3. Procédé selon la revendication 1, dans lequel ladite modification dentaire proposée inclut le remplacement d'une ou plusieurs dents par des dents artificielles, le remplacement d'une ou plusieurs parties d'une dent par une reconstruction prothétique telle qu'une facette ou une couronne dentaire, un réarrangement d'une ou plusieurs dent(s) existante(s) (traitement orthodontique), un écartement d'une ou des deux mâchoires afin de repositionner les dents (traitement orthognathe) ou des modifications de surfaces occlusales des dents.

4. Procédé selon n'importe quelle revendication précédente, comprenant en outre la simulation par ledit ordinateur de mouvements mandibulaires avant, arrière, latéral gauche, latéral droit, d'ouverture et fermeture tels que contraints par, d'une part, des restrictions géométriques imposées par de la modélisation mathématique de l'articulation temporo-mandibulaire et, d'autre part, de contacts de dent rencontrés pendant le mouvement.

5. Procédé selon n'importe quelle revendication précédente, comprenant en outre la construction par ledit ordinateur d'un modèle de mouvement pour simuler du mouvement mandibulaire après ladite modification dentaire proposée.

6. Procédé selon la revendication 5, comprenant en outre la simulation par ledit ordinateur du mouvement mandibulaire d'une façon anatomique qui copie la biomécanique réelle des deux mâchoires et des deux articulations temporo-mandibulaires du patient en tenant compte de données musculaires.

7. Articulateur virtuel informatisé pour évaluer un impact d'une modification dentaire proposée sur une articulation temporo-mandibulaire d'un patient, l'articulateur virtuel informatisé comprenant :
- un moyen pour charger un modèle dentaire numérique du patient dans un ordinateur exécutant un programme de simulation d'articulateur virtuel,
- un moyen pour simuler un ou plusieurs mouvement(s) fonctionnel(s) virtuel(s) d'une mâchoire du patient,
- un moyen pour appliquer ladite modification dentaire proposée au modèle numérique,
- un moyen pour simuler ledit/lesdits un ou plusieurs mouvement(s) fonctionnel(s) virtuel(s) pour ladite modification dentaire proposée,
**caractérisé en ce que** l'articulateur virtuel informatisé comprend en outre :
- un moyen de fourniture à un utilisateur d'informations concernant au moins un paramètre lié audit/auxdits un ou plusieurs mouvement(s) fonctionnel(s) virtuel(s) quand ladite modification dentaire proposée est appliquée, ledit au moins un paramètre étant sélectionné à partir d'au moins la quantité de mouvement de mâchoire dans une certaine direction, la vitesse à laquelle un certain mouvement de mâchoire est effectué et un angle autour duquel un mouvement de mâchoire rotatif est effectué, et dans lequel lesdites informations servent à ladite évaluation dudit impact de ladite modification dentaire proposée sur ladite articulation temporo-mandibulaire dudit patient, dans lequel ledit au moins un paramètre lié audit/auxdits un ou plusieurs mouvement(s) fonctionnel(s) virtuel(s) est un déplacement d'un condyle dudit patient, l'articulateur virtuel comprenant en outre :
- un moyen pour calculer un premier déplacement dudit condyle pour chacun dudit/desdits un ou plusieurs mouvement(s) fonctionnel(s) virtuel(s) avant application de ladite modification dentaire proposée au modèle numérique,
- un moyen pour calculer un second déplacement dudit condyle pour chacun dudit/desdits un ou plusieurs mouvement(s) fonctionnel(s) virtuel(s) après application de ladite modification dentaire proposée au modèle numérique,
- un moyen pour déterminer une différence relative de déplacement condylien à partir dudit second et dudit premier déplacement, pour chacun dudit/desdits un ou plusieurs mouvement(s) fonctionnel(s) virtuel(s),
- un moyen pour fournir audit utilisateur pour chacun dudit/desdits un ou plusieurs mouvement(s) fonctionnel(s) virtuel(s) de ladite différence relative de déplacement condylien, pour ladite évaluation dudit impact de ladite modification dentaire proposée sur ladite articulation temporo-mandibulaire dudit patient,
l'articulateur virtuel comprenant en outre, pour chacun dudit/desdits un ou plusieurs mouvement(s) fonctionnel(s) virtuel(s), des moyens :
- pour déterminer tous les points de contact de dent pour chaque dit mouvement fonctionnel virtuel,
- pour considérer pour chacun desdits points de contact de dent une différence de position condylienne entre une situation après ladite application de ladite modification dentaire proposée et une situation non traitée, avant ladite application de ladite modification dentaire proposée,
- pour marquer, pour chacun desdits points de contact de dent, ledit point de contact de dent négatif lorsque ladite différence de position condylienne révèle un déplacement antérieur du contact de dent sur la mandibule ou un déplacement postérieur du contact de dent sur le maxillaire, en même temps que la valeur de déplacement antérieur ou postérieur, et
- pour marquer ledit point de contact de dent positif, en même temps que la valeur de déplacement antérieur ou postérieur, lorsque la différence révèle un déplacement postérieur du contact de dent sur la mandibule ou un déplacement antérieur du contact de dent sur le maxillaire,
- pour calculer un effet global en tant qu'une somme de tous les déplacements signés, quantifiés pendant chaque dit mouvement fonctionnel virtuel,
- pour fournir audit utilisateur ladite somme pour ladite évaluation dudit impact de ladite modification dentaire proposée sur ladite articulation temporo-mandibulaire dudit patient.

8. Articulateur virtuel selon la revendication 7, comprenant en outre :
- un moyen pour entrer un diagnostic décrivant un effet non souhaité sur ladite articulation temporo-mandibulaire dudit patient provoqué par ledit au moins un paramètre lié audit/auxdits un ou plusieurs mouvement(s) fonctionnel(s) virtuel(s) de ladite mâchoire dudit patient,
- un moyen pour recevoir, sur base dudit diagnostic, des limites à l'intérieur desquelles ledit au moins un paramètre peut varier sans risque,
- un moyen pour comparer une valeur dudit au moins un paramètre auxdites limites lorsque ladite modification dentaire proposée est appliquée,
- un moyen pour catégoriser ladite modification dentaire proposée comme étant risquée si ladite valeur dépasse une limite parmi lesdites limites.

9. Articulateur virtuel selon la revendication 7, dans lequel ladite modification dentaire proposée inclut le remplacement d'une ou plusieurs dents par des dents artificielles, le remplacement d'une ou plusieurs parties d'une dent par une reconstruction prothétique telle qu'une facette ou une couronne dentaire, un réarrangement d'une ou plusieurs dent(s) existante(s) (traitement orthodontique), un écartement d'une ou des deux mâchoires afin de repositionner les dents (traitement orthognathe) ou des modifications de surfaces occlusales des dents.

10. Articulateur virtuel selon n'importe laquelle des revendications 7 à 9, comprenant en outre un moyen pour simuler le mouvement mandibulaire d'une façon anatomique qui copie la biomécanique réelle des deux mâchoires et des deux articulations temporo-mandibulaires du patient en tenant compte de données musculaires.

11. Produit formant programme informatique comprenant des segments de code qui lorsqu'ils sont mis en oeuvre sur un système informatique mettent en oeuvre les procédés selon l'une quelconque des revendications 1 à 6.
